# NEW EUROPEAN PATENT SPECIFICATION

(11) **EP 1 697 133 B2**
(45) Date of publication and mention of the opposition decision: **29.08.2012**
(45) Mention of the grant of the patent: 23.04.2008
(21) Application number: 04800384.2
(22) Date of filing: 24.11.2004
(51) Int. Cl.: B32B 27/42, B44C 5/04, C09D 11/10

(54) **A PROCESS FOR MANUFACTURING A DECORATIVE LAMINATE**
VERFAHREN ZUR HERSTELLUNG EINES ZIERLAMINATS
PROCEDE DE FABRICATION D'UN STRATIFIE DECORATIF

(30) Priority: 25.11.2003 SE 0303148
(43) Date of publication of application: 06.09.2006
(73) Proprietor: Pergo (Europe) AB, 231 25 Trelleborg (SE)
(72) Inventor: HANSSON, Krister, S-235 91 Vellinge (SE); LINDGREN, Kent, S-284 32 Perstorp (SE)
(74) Representative: Müller-Gerbes Wagner Albiger Patentanwälte
(86) International application number: PCT/SE2004/001723
(87) International publication number: WO 2005/051661

(56) References cited:
- WO-A1-01/48333
- WO-A1-97/00172
- DE-A1- 2 905 826
- US-A- 3 379 592
- US-A- 3 814 647
- US-A- 3 912 569
- US-A- 4 376 812
- US-A- 4 869 957
- US-A- 5 403 422

## Description

The present invention relates to a process for manufacturing a decorative laminate with increased laminar bond.

Products clad with thermosetting laminate are common in many areas nowadays. They are mostly used where the demands on abrasion resistance are high, and furthermore where resistance to different chemicals and moisture is desired. As examples of such products floors, floor skirting, table tops, work tops and wall panels can be mentioned.

The thermosetting laminate most often consist of a number of base sheets with a decor sheet placed closest to the surface. The decor sheet can be provided with a desired pattern. Common patterns usually visualise different kinds of wood or mineral such as marble and granite.

The substrate carrying the decor often consists of a cellulose sheet on which the decor is printed. It is also known to use polymeric or polymer/cellulose blend materials as a decor carrier on which the decor is printed. The decor sheet will need some protection and it is known to use one or more layers of cellulose impregnated with thermosetting resin arranged on top of the decor layer. It is known that the printing ink itself sometimes will cause problems with de-lamination, especially when certain pigments, solvents and amounts of ink is used. This problem sometimes occurs after some time of use.

US-A-3 379 592 discloses a method of producing patterned dinnerware using a transfer printing process. A thermosetting resin ink is applied in a design to a non-impregnable film and partially cured, the inked surface of the film is then applied to a partially cured thermosetting member, fully cured, and then the non-impregnable film is peeled off. Finally, melamine resin is sprayed onto the upper surface and the whole undergoes a further curing cycle.

WO 97/00172 discloses a method for manufacturing thermosetting plastic laminates. Particles are included between the laminate layers to improve the durability of the final laminate.

It has, through the present invention, been made possible to overcome the above-mentioned problems and a decorative laminate where the bond between the décor layer and the supporting layers is increased has been obtained.

According to the present invention, there is provided a process for manufacturing a decorative laminate comprising a base layer, a decorative layer and a wear layer, the wear layer comprising a mixture of cellulose and a thermosetting melamine-formaldehyde resin and/or a thermosetting urea formaldehyde resin, the process comprising the steps of:
printing a décor comprising a printing ink on the base layer to form the decorative layer, the printing ink including an amino resin for increasing the bond between the decorative layer and the wear layer, and
laminating the layers in a laminate press under increased temperature and pressure,
wherein the wear layer is provided with a surface structure that enhances the realistic impression of the decor during or after the lamination, wherein this is achieved by embossing.

The printing ink is preferably an alkyde based ink or a polyester-acrylate based ink. The amino resin added to the ink is preferably an etherified amino resin or a methylol amino resin.

The base layer may, according to one embodiment of the invention, be manufactured in the desired end user format and provided with edges intended for joining before applying decor and wear layer. A main part of the base layer is suitably constituted by a particle board or a fibre board. It is advantageous to include in the base layer a paper layer on which the decor is printed. This paper layer is suitably bonded to the remainder of the base layer prior to the printing of the decor.

The wear layer is comprised of a mixture of cellulose and a thermosetting melamine-formaldehyde resin and/or a thermosetting urea formaldehyde resin applied on top of the decorative layer prior to the lamination. According to another embodiment of the invention the wear layer is comprised of one or more cellulose layers impregnated with the thermosetting melamine-formaldehyde resin and/or the thermosetting urea formaldehyde resin.

In order to increase the abrasion resistance it is advantageous to add hard particles with an average particle size in the range 50nm - 150µm to the wear layer. In order to increase both scratch resistance and wear resistance the outer portion of the wear layer is suitably provided with hard particles with an average particle size in the range 50nm - 30µm while the inner portion of the wear layer is provided with hard particles with an average particle size in the range 31 µm - 150 µm. The hard particles are preferably constituted by silicon oxide, silicon carbide, aluminium oxide or the like.

According to one embodiment of the invention the decor is achieved by digitisation of an actual archetype or by partly or completely being created in a digital media. The digitised decor is stored digitally in order to be used as a control function and original, together with possible control programs, when printing the decor.

The decor may accordingly be obtained by making a high resolution or selected resolution digital picture of the desired decor. This is suitably made by means of a digital camera or scanner. The most common decor will of course be different kinds of wood and minerals like marble, as these probably will continue to be preferred surface decoration in home and public environments. It is, however, possible to depict anything that is visible. The digitised version of the decor is then edited to fit the size of the supporting core. It is also possible to rearrange the decor in many different ways, like changing colour tones, contrast, dividing the decor into smaller segments and adding other decorative elements. It is also possible to completely create the decor in a computer equipped for graphic design. It is possible to create a simulated decor so realistic that even a professional will have great problems in visually separating it from genuine material. This makes it possible to make for example floor boards with an almost perfect illusion of a rare kind of wood, like ebony or rose wood and still preserving trees under threat of extermination.

The digital decor is used together with guiding programs to control a printer. The printer may be of an electrostatic type or an ink-jet type printer. Most often the colours yellow, magenta, cyan and black will be sufficient for the printing process, but in some cases it might be advantageous to add white. Some colours are difficult to achieve using the colours yellow, magenta, cyan, black and white whereby the colours light magenta and light cyan may be added. It is also possible to add so called spot colours where specific colour tones are difficult to achieve or where only certain parts of the colour spectrum with intermixing shades is desired. The resolution needed is much depending on the decor that is to be simulated, but resolutions of 10 - 1500 dots per inch (dpi) is the practical range in which most decors will be printed. Under normal conditions a resolution of 300 - 800 dpi is sufficient when creating simulations of even very complex decorative patterns and still achieve a result that visually is very difficult to separate from the archetype without close and thorough inspection.

It is advantageous to manufacture the supporting core in the desired end user format and to provide it with edges suited for joining before applying the decor and wear layer, since the amount of waste thereby is radically reduced. The decor matching tolerances will also be improved further by this procedure.

The translucent wear layer may be suitably constituted of a melamine-formaldehyde resin / cellulose blend or one or more sheets of cellulose which are impregnated with melamine-formaldehyde resin. This wear layer is joined with the core and decor under heat and pressure whereby the resin cures. It is advantageous to add hard particles with an average particle size in the range 50 nm - 150 µm to the wear layer. Larger particles, in the range 10 µm - 150 µm, preferably 30 µm - 150 µm is foremost used to achieve abrasion resistance while the smaller of the particles, in the range 50 nm - 30 µm, preferably 50 nm - 10 µm, is used to achieve scratch resistance. The smaller particles is hereby used on, or very close to, the top surface while the larger particles may be distributed in the wear layer. The particles are advantageously constituted of silicon carbide, silicon oxide or aluminium oxide. The wear layer is hereby suitably pressed together with the rest of the decorative laminate in a continuous belt press with two steel belts. It is also possible to utilise a discontinuous process where one or a number of surface elements can be pressed at the same time.

## Claims

1. A process for manufacturing a decorative laminate comprising a base layer, a decorative layer and a wear layer, the wear layer comprising a mixture of cellulose and a thermosetting melamine-formaldehyde resin and/or a thermosetting urea formaldehyde resin, the process comprising the steps of:
printing a décor,
laminating the layers in a laminate press under increased temperature and pressure,
**characterized in that**
the wear layer is provided with a surface structure that enhances the realistic impression of the décor during or after lamination by embossing, and
the printing of the decor comprises a printing ink on the base layer to form the decorative layer, wherein the printing ink includes an amino resin for increasing the bond between the decorative layer and the wear layer.

2. A process according to Claim 1, wherein the printing ink is an alkyde based ink.

3. A process according to Claim 1, wherein the printing ink is a polyester-acrylate based ink.

4. A process according to Claims 2 or 3, wherein the amino resin included in the printing ink is an etherified amino resin or a methylol amino resin.

5. A process according to Claim 1, wherein the base layer is manufactured in the desired end user format and provided with edges intended for joining before applying the décor and the wear layer.

6. A process according to Claim 5, wherein the main part of the base layer comprises a particle board or a fibre board.

7. A process according to Claim 5 or Claim 6, wherein the base layer includes a paper layer on which the décor is printed.

8. A process according to Claim 7, wherein the paper layer is bonded to the remainder of the base layer prior to the printing of the décor.

9. A process according to Claim 1, wherein the wear layer is comprised of one or more cellulose layers impregnated with the thermosetting melamine formaldehyde resin and/or the thermosetting urea formaldehyde resin.

10. A process according to any preceding Claim, wherein the wear layer further comprises hard particles formed from silicon oxide, silicon carbide or aluminium oxide having an average particle size of 50 nm-150 µm.

11. A process according to Claim 10, wherein the outer portion of the wear layer is provided with the hard particles having an average particle size of 50 nm-30 µm while the inner portion of the wear layer is provided with the hard particles having an average particle size of 31 µm-150 µm.

## Patentansprüche

1. Verfahren zur Herstellung eines dekorativen Laminats, das eine Basisschicht, eine Dekorschicht und eine Abnutzungsschicht umfasst, wobei die Abnutzungsschicht eine Mischung aus Zellulose und einem wärmehärtenden Melamin-Formaldehydharz und/oder einem wärmehärtenden Harnstoff-Formaldehydharz umfasst, und wobei das Verfahren die folgenden Schritte umfasst:
Aufdruck eines Dekors,
Laminierung der Schichten in einer Laminierungspresse bei erhöhter Temperatur und Druck
**dadurch gekennzeichnet, dass**
die Abnutzungsschicht mit einer Oberflächenstruktur, die den realistischen Eindruck des Dekors verstärkt, während oder nach Laminierung durch Prägen versehen wird, und
der Aufdruck des Dekors eine Druckfarbe auf der Basisschicht umfasst, um die Dekorschicht zu bilden, wobei die Druckfarbe zur Stärkung der Bindung zwischen der Dekorschicht und der Abnutzungsschicht ein Aminoharz beinhaltet.

2. Verfahren gemäß Anspruch 1, wobei die Druckfarbe eine Farbe auf Alkydbasis ist.

3. Verfahren gemäß Anspruch 1, wobei die Druckfarbe eine Farbe auf Polyesteracrylatbasis ist.

4. Verfahren gemäß Anspruch 2 oder 3, wobei das in der Druckfarbe enthaltene Aminoharz ein verethertes Aminoharz oder ein Methylolaminoharz ist.

5. Verfahren gemäß Anspruch 1, wobei die Basisschicht im vom Endabnehmer gewünschten Format
hergestellt wird und mit Kanten zum Zusammenfügen vor dem Auftragen von Dekor und der Abnutzungsschicht versehen ist.

6. Verfahren gemäß Anspruch 5, wobei der Hauptteil der Basisschicht eine Spanplatte oder eine Faserplatte umfasst.

7. Verfahren gemäß Anspruch 5 oder Anspruch 6, wobei die Basisschicht eine Papierschicht beinhaltet, auf die das Dekor aufgedruckt wird.

8. Verfahren gemäß Anspruch 7, wobei die Papierschicht vor dem Aufdrucken des Dekors mit dem Rest der Basisschicht verbunden wird.

9. Verfahren gemäß Anspruch 1, wobei die Abnutzungsschicht eine oder mehrere Zelluloseschichten, die mit dem wärmehärtenden Melamin-Formaldehydharz und/oder dem wärmehärtenden Harnstoff-Formaldehydharz imprägniert sind, umfasst.

10. Verfahren gemäß einem der vorhergehenden Ansprüche, wobei die Abnutzungsschicht weiterhin Hartpartikel aus Siliziumoxid, Siliziumcarbid oder Aluminiumoxid mit einer mittleren Teilchengröße von 50 nm bis 150 µm umfasst.

11. Verfahren gemäß Anspruch 10, wobei der äußere Teil der Abnutzungsschicht mit Hartpartikeln mit einer mittleren Teilchengröße von 50 nm bis 30 µm versehen ist, während der innere Teil der Abnutzungsschicht mit Hartpartikeln mit einer mittleren Teilchengröße von 31 bis 150 µm versehen ist.

## Revendications

1. Procédé pour la fabrication d'un stratifié décoratif comprenant une couche de base, une couche décorative et une couche d'usure, la couche d'usure comprenant un mélange de cellulose et de résine mélamine-formaldéhyde thermodurcissable et/ou une résine urée-formaldéhyde thermodurcissable, le procédé comprenant les étapes :
imprimer un décor,
stratifier les couches dans une presse de stratification à des température et pression accrues
**caractérisé en ce que**
lequel la couche d'usure est munie d'une structure de surface par estamper qui augmente l'impression réaliste du décor pendant ou après la stratification, et comprenant une encre d'impression sur la couche de base pour former la couche décorative, l'encre d'impression comprenant une résine aminée pour augmenter l'adhérence entre la couche décorative et la couche d'usure.

2. Procédé selon la revendication 1, dans lequel l'encre d'impression est une encre à base d'alkyde.

3. Procédé selon la revendication 1, dans lequel l'encre d'impression est une encre à base de polyesteracrylate.

4. Procédé selon les revendications 2 ou 3, dans lequel la résine aminée contenue dans l'encre d'impression est une résine aminée éthérifiée ou une résine aminée méthylol.

5. Procédé selon la revendication 1, dans lequel la couche de base est fabriquée dans le format de l'utilisateur final souhaité et munie de bords destinés à être réunis avant l'application du décor et de la couche d'usure.

6. Procédé selon la revendication 5, dans lequel la partie principale de la couche de base comprend un panneau de particules ou un panneau de fibres.

7. Procédé selon la revendication 5 ou la revendication 6, dans lequel la couche de base comprend une couche de papier sur laquelle est imprimé le décor.

8. Procédé selon la revendication 7, dans lequel la couche de papier est liée au reste de la couche de base avant l'impression du décor.

9. Procédé selon la revendication 1, dans lequel la couche d'usure comprend une ou plusieurs couches de cellulose imprégnées de la résine de formaldéhyde mélamine thermodurcissable et/ou de la résine urée formaldéhyde thermodurcissable.

10. Procédé selon l'une quelconque des revendications précédentes, dans lequel la couche d'usure comprend de plus des particules dures formées à partir d'oxyde de silicium, de carbure de silicium ou d'oxyde d'aluminium ayant une taille particulaire moyenne de 50 nm-150 µm.

11. Procédé selon la revendication 10, dans lequel la portion extérieure de la couche d'usure est munie des particules dures ayant une taille particulaire moyenne de 50 nm-30 µm, tandis que la portion interne de la couche d'usure est munie des particules dures ayant une taille particulaire moyenne de 31 µm -150 µm.
